# EUROPÄISCHE PATENTSCHRIFT

(11) **EP 2 324 090 B1**
(45) Veröffentlichungstag und Bekanntmachung des Hinweises auf die Patenterteilung: **09.10.2013**
(21) Anmeldenummer: 09778101.7
(22) Anmeldetag: 26.08.2009
(51) Int. Cl.: C09J 111/02, C08L 11/02

(54) **FORMULIERUNGEN AUF BASIS ANIONISCH-STABILISIERTER, WÄSSRIGER POLYMER-DISPERSIONEN**
FORMULATIONS BASED ON ANIONICALLY STABILIZED AQUEOUS POLYMER DISPERSIONS
FORMULATIONS À BASE DE DISPERSIONS POLYMÈRES AQUEUSES ANIONIQUEMENT STABILISÉES

(30) Priorität: 05.09.2008 DE 102008045805
(43) Veröffentlichungstag der Anmeldung: 25.05.2011
(73) Patentinhaber: Bayer Intellectual Property GmbH, 40789 Monheim (DE)
(72) Erfinder: ACHTEN, Dirk, 51375 Leverkusen (DE); KUEKER, Peter, 50931 Köln (DE); KEMPKES, Juergen, 51069 Köln (DE); LORENZ, Bianka, 41539 Dormagen (DE); MATNER, Mathias, 41464 Neuss (DE); JESKE, Winfried, 51399 Burscheid (DE); COLINAS-MARTINEZ, Jose, 42929 Wermelskirchen (DE)
(74) Vertreter: BIP Patents
(86) Internationale Anmeldenummer: PCT/EP2009/006158
(87) Internationale Veröffentlichungsnummer: WO 2010/025862

(56) Entgegenhaltungen:
- US-A1- 2003 221 778
- US-A1- 2005 137 309

## Beschreibung

Die Erfindung betrifft Formulierungen auf Basis anionisch-stabilisierter wässriger Polymer-Dispersionen, enthaltend Polychloropren, die mit Kohlendioxid (CO₂) versetzt wurden, ein Verfahren zu deren Herstellung, sowie deren Verwendung zur Herstellung von Klebstoffen Dichtstoffen, Volumenteilen oder Beschichtungen.

Gebräuchliche Kontaktklebstoffe des Standes der Technik z.B. auf Basis von Polychloropren, Styrolbutadien-Styrol-Blockcopolymeren, Styrol-Acrylatcopolymeren oder Polyurethanen sind überwiegend lösemittelhaltige Klebstoffe.

Aus ökologischen, ökonomischen sowie Arbeitssicherheits- und Hygiene- Gründen besteht ein wachsender Bedarf an gecigneten wässrigen Dispersionen, die sich zu entsprechenden lösungsmittelfreien Klebstoffformulierungen verarbeiten lassen.

Stand der Technik sind lösungsmittelfreie Kontaktklebstoffformulierungen auf Basis von Polychloropren als Hauptbestandteil der Klebstoffzusammensetzung. Ein wesentliches Qualitätsmerkmal für wässrige Kontaktklebstoffformulierungen ist eine gute Nass-in-Nass Verklebbarkeit auf verschiedensten Substraten (hohe Klebrigkeit bzw. Reaktivität des Klebstoffs direkt nach Klebstoffauftrag) kombiniert mit einer hohen Anfangsfestigkeit direkt nach Verbindung der zu verklebenden Substrate.

Der Begriff hohe Anfangsfestigkeit ist eng mit der Definition eines Kontaktklebstoffes verknüpft. Kontaktklebstoffe können grundsätzlich bei Umgebungstemperatur auf Substrate mit Umgebungstemperatur aufgetragen werden. Unter einer ausreichend hohen Anfangsfestigkeit ist eine Festigkeit direkt nach dem Fügen der Substrate zu verstehen, die zur Weiterverarbeitung der Fügeteile ausreichend hoch ist, damit ein Verrutschen der gefügten Teile im folgenden Verarbeitungsprozess vermieden wird, bzw. wobei die verklebten Substrate eine Festigkeit unterhalb der Adhäsions- und Kohäsionsfestigkeit der Klebstoffschicht aufweisen, so dass in der Regel bei Belastung des gefügten Objektes das Fügeteil vor der Klebstoffschicht zerstört wird.

Typischerweise müssen die kommerziell erhältlichen Dispersionen zur Erreichung einer ausreichenden Anfangsfestigkeit destabilisiert oder aktiviert werden. Ein Hauptproblem bei der Formulierung reaktiver Klebstoffe ist dabei die Schwierigkeit eine ausreichende Reaktivität mit einer ausreichenden Lager-, Temperatur-, Scher- und Transportstabilität zu verknüpfen.

Gebräuchliche anionisch-stabilisierte Dispersionen oder Formulierungen auf Basis von Polychloropren werden zu diesem Zweck üblicherweise gezielt im pH-Wert reduziert und in Folge destabilisiert bzw. aktiviert und dadurch erst zu einer Nass-in-Nass Klebung befähigt. Nachteilig ist, dass mit sinkendem pH-Wert auch die Lager-, Temperatur-, Scher -und Transportstabilität solcher Formulierungen sinkt. Des Weiteren werden durch oxidative und hydrolytische Vorgänge in den Dispersionen kontinuierlich weitere destabilisierende Prozesse in Gang gesetzt, die unweigerlich eine Koagulation, beziehungsweise stark verminderte Lager-, Temperatur-, Scher -und Transportstabilität bedingen.

Unter Aktivierung wird zum Zwecke der vorliegenden Erfindung das Einstellen der Anfangsklebrigkeit bei Klebstoffformulierungen, sowie das Auslösen des Abbindungs- bzw. Vemetzungsprozesses bei der Herstellung von Hydrogelen, Schäumen, Beschichtungen und Dichtungen verstanden.

Es ist weiterhin Stand der Technik, dass anionisch-stabilisierte Polymerdispersionen nicht dauerhaft stabil sind, weil die als Haupt-Emulgatoren verwendeten Harzsäuresalze und/oder Fettsäuren als Emulgatoren durch Überführung in ihre Säureform nicht mehr als Emulgatoren zur Verfügung stehen und damit eine effektive Stabilisierung des Latex nicht mehr gegeben ist.

Es ist weiterhin allgemein bekannt, dass die Zugabe größerer Mengen von pH-Wert-stabilen, anionischen Emulgatoren auf z.B. Sulfat- oder Sulfonatbasis sowie nicht ionische Emulgatoren eine pH-Wertstabilität bei pH-Wert < 9 prinzipiell unterstützen, allerdings auf Kosten der Kontaktklebrigkeit der Formulierungen, bedingt durch verstärkte Schaumbildung und Unterdrückung der Koagulation der Latexpartikel bzw. Verschlechterung der Filmbildungseigenschaften.

Ein weiteres Verfahren zur gezielten Destabilisierung von anionisch-stabilisierten Polychloropren enthaltenden Dispersionen besteht in der Zugabe von zusätzlichen Elektrolyten, die zum einen die Ionenstärke des Wassers erhöhen und damit die Effektivität der anionischen Emulgatoren reduzieren sowie die vorhandenen Emulgatoren gezielt durch koordinative und komplexierende Effekte und/oder Fällung in ihrer Funktion als Emulsionsstabilisatoren unwirksam machen. Beispielsweise werden dazu einwertige, zweiwertige oder dreiwertige anorganische Salze beispielhaft seien genannt KCl, NaCl, Na₂SO₄, ZnCl₂, MgCl₂, CaCl₂, AlCl₃, Al₂(SO₄)₃ oder anorganische oder organischen Säuren eingesetzt. Als nachteilig ist auch hier eine reduzierte Lager-, Temperatur-, Scher- und Transportstabilität zu nennen. Solche Formulierungen werden im Folgenden 1-Komponenten-Klebstoffformulierungen genannt.

Von den im Stand der Technik genannten Säuren und Salzen, die zur gezielten Destabilisierung bzw. Aktivierung von Polychloropren Latices geeignet sind, können nur Aminosäuren wie Glycin oder Borsäure direkt zugesetzt werden, ohne die Konzentration des gewünschten Latex zu verdünnen. Alle anderen Substanzen (Salze, Säuren, Puffer) müssen in mehr oder weniger großer Verdünnung in Wasser zugesetzt werden, um eine direkte Koagulation des Latex bei Zugabe der Komponenten zu vermeiden. Jedoch ist der Einsatz von Glycin oder Borsäure ebenfalls mit Nachteilen behaftet, da z.B. Glycin in hohen Konzentrationen eingesetzt zur Erreichung eines niedrigen pH Wertes aufgrund der oberflächenaktiven Wirkung die Kontaktierungseigenschaften der Formulierung stark negativ beeinflusst und Borsäure zukünftig als toxisch einzustufen ist. Eine nachträgliche Aktivierung von hochviskosen Formulierungen gelingt mittels der genannten Säuren typischerweise nur sehr schlecht aufgrund der nur langsamen Verteilung in den hochviskosen Formulierungen und daraus resultierender Überkonzentrationen welche in Kombination mit der mechanischen Belastung in Rührwerken zu Koagulatbildung führt.

Insgesamt zeigen Klebstoff-Formulierungen basierend auf anionisch-stabilisierten Polychloropren Dispersionen schon bei einem pH-Wert < 10 eine verminderte Lager-, Temperatur-, Scher -und Transportstabilität.

Ein weiteres Problem bei der Formulierung von 1-Komponenten-Klebstoffen auf Basis von anionisch-stabilisierten kommerziell verfügbaren Polychloropren-Dispersionen ist, dass diese im Laufe der Lagerung in signifikanten Mengen HCl abspalten. Diese Zusatzbelastung durch zusätzliche pH-Werterniedrigung führt bei fertig formulierten, reaktiven 1-Komponenten Klebstoffformulierungen zu einer nochmaligen Begrenzung der Lager-, Temperatur-, Scher -und Transportstabilität.

Somit ist neben der Stabilität der Formulierung auch die pH-Wert Stabilität eines fertigen applizierten Klebstoffes von Interesse, da eine HCl-Abspaltung mögliche Verfärbungen im Klebstoff sowie auf pH-Wert empfindlichen Substraten hervorrufen kann. Einem möglichen Säure-Angriff wird üblicherweise durch Zugabe von zweiwertigen, vordispergierten Metalloxiden (ZnO, MgO, CaO), zum Teil als Nanoteilchen vorliegend, und/oder aminischen Säurefängern entgegengewirkt (z.B. beschrieben in WO-A 2004/106422).

Weiter wird in der Anmeldung US-A 2003/221778 der Einsatz von Kieselsäure/Wasserglas-Suspensionen zur Verbesserung der Nassklebrigkeit und Initialfestigkeit sowie Endfestigkeit von Polychloropren Kontaktklebstoffformulierungen beschrieben. Außerdem werden über KieselsäureSuspensionen mit Hilfe von pH-Wert und ein und/oder zweiwertigen Ionen gezielt Viskositäten eingestellt. Die in der US-A 2003/221778 offenbarten Kieselsäuren sind sowohl empfindlich gegenüber niedrigem pH-Wert (< 9) als auch hohen Konzentrationen, besonders an zweiwertigen Ionen/Metalloxiden (ZnO, MgO).

Der Einsatz von Kohlendioxid als Neutralisations- und Koagulationsmittel in anionisch stabilisierten Dispersionen ist bereits vielfältig in Stand der Technik offenbart. Dort wird Kohlendioxid als schwache Säure zur Neutralisierung einer anionisch stabilisierten Polymerdispersion eingesetzt, mit dem Ziel der direkten Koagulation zum Erhalt eines Feststoffes aus der Dispersion oder zwecks Aufrahmung durch Agglomeration und Ausfrieren von Dispersionen zur Verbesserung der Eigenschaften des Produktes zur Herstellung von Latexschäumen. Grundlegend für die beschriebenen Anwendungen von Kohlendioxid war immer, dass eine Destabilisierung einer anionischen Dispersion durch Kohlendioxid im Ergebnis eine Teil oder endgültige Koagulation nach kürzester Zeit bewirkt. Alternativ, im Falle der Aufrahmungshilfe, wurde der Latex im Anschluss zum Teil zur Verbesserung der Haltbarkeit wieder basisch gestellt.

Die Problematik der Lager-, Temperatur-, Scher- und Transportinstabilität verursacht durch gezielte Destabilisierung/Aktivierung einer anionisch-stabilisierten Klebstoff-Formulierung (1-Komponenten-Formulierung) kann umgangen werden, indem die Destabilisierung/Aktivierung erst unmittelbar vor, mit bzw. durch die Applikation erfolgt (2-Komponenten Formulierung bzw. Verfahren). Diese Aktivierung ist dann typischerweise sofort wirksam und führt zur direkten Koagulation bzw. Brechen der Formulierung während der Applikation oder auf den Substraten. Dadurch können hierdurch benetzte Substrate sofort mit hervorragenden Nass in Nass Klebeigenschaften unter Druck verfügt werden.

Diese 2-Komponenten Klebstoffe setzen sich üblicherweise zusammen aus einer anionisch-stabilisierten Dispersion oder Formulierung enthaltend Polychloropren und einer separaten Destabilisierungs bzw. Aktivierungskomponente.

Ein Beispiel dieses Verfahrens ist das "Spray-mix"-Verfahren. Bei diesem Verfahren wird der Klebstoff sowie ein Koagulationsmittel separat in einer Sprühpistole gefördert, im Sprühstrahl gemischt und noch im Flug und/oder auf dem Fügeteil koaguliert. Als Destabilisierungskomponente können dabei beispielsweise konzentrierte wässrige Lösungen von Alkalimetall-, Erdalkalimetallionen, dreiwertige Aluminiumionen, anorganische/organische Säuren oder Mischungen der genannten dienen.

Nachteile dieses Verfahrens sind der hohe apparative Aufwand, der fehleranfällige Mischprozess sowie die typischerweise hohen Ionenkonzentrationen in den resultierenden Klebstoffen, die zu erhöhter Gleichgewichtswasserquellung oder - im Fall des Einsatzes von Säuren - bei der Einstellung von niedrigen pH-Werten zu Korrosion in Zusammenhang mit metallischen Substraten führen können. Weiterhin werden durch dieses Verfahren typischerweise erhöhte Wassermengen in die Formulierungen durch die zweite Komponente eingeschleppt, die zu Problemen bei Trocknungsprozessen und überhöhten Restfeuchten in den Produkten führen können, z.B. mit der Gefahr der Korrosion von empfindlichen Substraten. Das Verfahren ist vergleichsweise zeit- und kostenintensiv und deshalb aus ökonomischer Sicht unbefriedigend.

Aufgabe der vorliegenden Erfindung bestand somit in der Bereitstellung von ökologisch und ökonomisch vorteilhaften, Temperatur, Alterungs-, Lagerungs- Scher- und Transport-stabilen wässrigen Klebstoffzusammensetzungen, die nach der Applikation auf den zu verklebenden Substraten nach kurzer Zeit (Wartezeit < 5 min) ein Fügen Nass-in-Nass unter Druck bei ausreichend hoher Anfangsfestigkeit (Nassfestigkeit), insbesondere in noch feuchtem Zustand, auch auf schwierig zur verklebenden Substraten ermöglichen.

Überraschenderweise wurde gefunden, dass die Aufgabe gelöst wird durch Zugabe von gasförmigem Kohlendioxid in eine Formulierung auf Basis einer wässrigen Polymer-Dispersion, enthaltend eine anionisch-stabilisierte Polychloropren Dispersion, wobei das Kohlendioxid nach Zugabe zur Polymerdispersion als Kohlensäure in einem Dissoziationsgleichgewicht gelöst vorliegt.

Gegenstand der vorliegenden Erfindung ist eine Formulierung auf Basis einer wässrigen Polymer-Dispersion enthaltend bezogen auf den Feststoffanteil >20 Gew.-%, bevorzugt >40 Gew.-%, besonders bevorzugt >50 Gew.-% einer anionisch-stabilisierten Polychloropren-Dispersion, wobei die Gesamtfeststoffkonzentration = 100 Gew.-% gesetzt wird, dadurch gekennzeichnet, dass bei einem pH-Wert zwischen 6 und 10 der Anteil an gelöster Kohlensäure im Dissoziationsgleichgewicht zwischen 0,0001 bis 2 Gew.-%, bezogen auf die Dispersion, beträgt.

Bevorzugt weist die erfindungsgemäße Formulierung einen pH-Wert von 6,5 bis 9,5 auf und einen Anteil an gelöster Kohlensäure von 0,001 bis 1 Gew.-%, besonders bevorzugt einen pH-Wert von 7 bis 9 auf und einen Anteil an gelöster Kohlensäure von 0,003 bis 0,9 Gew.-%, ganz besonders bevorzugt einen pH-Wert von 7,5 bis 8,5 und einen Anteil an gelöster Kohlensäure von 0,01 bis 0,25 Gew.-%.

Des Weiteren beträgt die Alkaliionenkonzentration (Na⁺ und K⁺ in Summe) in der erfindungsgemäßen Formulierung 500 bis 10000 ppm, bevorzugt 700 bis 6000 ppm, besonders bevorzugt 900 bis 4000 ppm.

Die einzusetzenden Polymer-Dispersionen haben vor dem Zusatz von Kohlendioxid einen Ausgangs pH-Wert > 6,5, bevorzugt >8 besonders bevorzugt > 9,5, ganz besonders bevorzugt > 10. Da die Aktivierung mit Kohlendioxid erst kurz vor der Applikation durchgeführt wird, zeigen die wässrigen Polymer-Dispersionen, enthaltend eine anionisch-stabilisierte Polychloropren-Dispersion bei einem pH-Wert > 10 eine deutlich verbesserte Lager-, Temperatur-, Scher- und Transportstabilität. Vorteilhaft kann die Aktivierung mittels Kohlendioxid aufgrund der hervorragenden Löslichkeit und Verteilungsgeschwindigkeit auch bei sehr hoch viskosen Polymerdispersionen / Formulierungen erfolgen, ohne zu vorzeitiger Koagulation zu führen.

Die erfindungsgemäße Formulierung ist nach beendeter Aktivierung noch > 5 Min. koagulatfrei.

Geeignete Polychloroprendispersionen werden durch Emulsionspolymerisation von Chloropren gegebenenfalls enthaltend copolymerisierbare ethylenisch ungesättigte Monomere in alkalischem Medium hergestellt. Die Polychloroprenherstellung ist seit langem bekannt, sie erfolgt durch E-mulsionspolymerisation im alkalischen wässrigen Medium, vgl. "Ullmanns Encyclopädie der technischen Chemie", Band 9, S. 366, Verlag Urban und Schwarzenberg, München-Berlin 1957; "Encyclopedia of Polymer Science and Technology", Vol. 3, S. 705-730, John Wiley, New York-1965; "Methoden der Organischen Chemie" (Houben-Weyl) XIV/1, 738 f. Georg Thieme Verlag Stuttgart 1961, WO-A 02/24825 (S.3 Z. 26 - S. 7 Z.45), DE-A 30 02 734 (S.8, Z. 23 - S. 12, Z. 9) oder US-A 5,773,544 (Sp.2, Z.9 - Sp. 4 Z. 45). Die Polymerisation kann dabei auch kontinuierlich erfolgen wie beschrieben in WO- A 02/24825, Beispiel 2 und DE-A 30 02 734, Beispiel 6.

Als Emulgatoren kommen prinzipiell alle Verbindungen und deren Mischungen in Betracht, die die Emulsion hinreichend stabilisieren, wie z.B. die wasserlöslichen Salze, insbesondere die Natrium-, Kalium- und Ammoniumsalze von langkettigen Fettsäuren, Kolophonium und Kolophoniumderivate, höhermolekulare Alkoholsulfate, Arylsulfonsäuren oder Formaldehydkondensate von Arylsulfonsäuren. Als Coemulgatoren seien beispielhaft genannt nichtionische Emulgatoren auf Polyethylenoxid- und Polypropylenoxidbasis sowie emulgierend wirkende Polymere, wie Polyvinylalkohol.

Erfindungsgemäß geeignete Polychloroprene können in Gegenwart von 0 - 20 Gew.-Teilen, bezogen auf 100 Gew.-Teile Chloropren, copolymerisierbaren ethylenisch ungesättigten Monomeren in Gegenwart von 0 - 1 mmol eines Reglers, bezogen auf 100 g Monomer, bei Temperaturen von 0 - 70°C in alkalischer Emulsion hergestellt werden.

Die Aktivierung der Polymerisation erfolgt durch die üblichen Aktivatoren bzw. Aktivatorsysteme. Als Beispiele für Aktivatoren bzw. Aktivatorsysteme seien genannt: Formamidinsulfinsäure, Kaliumperoxodisulfat, Redoxsysteme auf Basis von Kaliumperoxodisulfat und gegebenenfalls Silbersalz (Na-Salz der Anthrachinon-β-sulfonsäure), wobei beispielsweise Verbindungen wie Formamidinsulfinsäure, das Na-Salz der Hydroxymethansulfinsäure, Natriumsulfit und Natriudithionit als Redoxpartner dienen. Auch Redoxsysteme auf Basis von Peroxiden und Hydroperoxiden sind geeignet. Die Herstellung der erfindungsgemäß geeigneten Polychloroprene kann sowohl kontinuierlich als auch diskontinuierlich erfolgen.

Copolymerisierbare Monomere sind Verbindungen mit 3 bis 12 C-Atomen und 1 oder 2 copolymerisierbaren C=C-Doppelbindungen pro Molekül. Beispiele bevorzugter copolymerisierbarer Monomere sind 2,3-Dichlorbutadien und 1-Chlorbutadien, Acrylnitril, Acrylsäure, Maleinsäure, Fumarsäure oder Ethylenglycoldimethacrylat.

Zur Molekulargewichtseinstellung der erfindungsgemäß geeigneten Polychloroprene können Kettenübertragungsmittel wie Mercaptane, Xanthogendisulfide oder Dithiocarbamate verwendet werden. Als Inhibitor oder Abstopper der Polymerisation bei einem gewünschten Monomerumsatz von bis zu 95% können z.B. Phenothiazin, tert.-Butylbrenzcatechin oder Diethylhyroxylamin zugegeben werden.

Die erfindungsgemäßen Formulierungen können neben der anionisch-stabilisierten Polychloropren-Dispersion optional weitere Bestandteile enthalten. Beispielhaft seinen genannt Polyacrylatdispersionen, Polyurethandispersionen, Polyurethan-Polyacrylatdispersionen, Styrolbutadiendispersionen oder Acrylnitrilbutadiendispersionen. Weiter können enthalten sein Abmischung von geeigneten kompatiblen wässrigen Polymerdispersionen untereinander.

Bevorzugt weist die erfindungsgemäße Formulierung einen pH-Wert von 6,5 bis 9,5 auf und einen Anteil an gelöster Kohlensäure von 0,001 bis 1 Gew.-%, besonders bevorzugt einen pH-Wert von 7 bis 9 auf und einen Anteil an gelöster Kohlensäure von 0,003 bis 0,9 Gew.-%, ganz besonders bevorzugt einen pH-Wert von 7,5 bis 8,5 und einen Anteil an gelöster Kohlensäure von 0,01 bis 0,25 Gew.-%.

Die erfindungsgemäßen Formulierungen enthalten neben der Polychloropren-Dispersion gegebenenfalls weitere Hilfs- und Zusatzstoffe.

Beispielsweise können Füllstoffe wie Quarzmehl, Quarzsand, hochdisperse Kieselsäuren (Suspensionen oder Fest), Schwerspat, Calciumcarbonat, Kreide, Dolomit, Aluminiumhydroxid, Aluminiumoxid oder Talkum, gegebenenfalls zusammen mit Netzmitteln, beispielsweise Polyphosphaten (wie Natriumhexametaphosphat), Naphthalinsulfonsäure, Ammonium- oder Natriumpolyacrylsäuresalze, sowie Alkali und Erdalkali-Salze der Phosphorsäure zugesetzt werden, wobei die Füllstoffe im allgemeinen in Mengen von 0 bis 60 Gew.-% in der Formulierung bezogen auf die Gesamtfeststoffkonzentration = 100 Gew.-% und die Netzmittel im allgemeinen in Mengen von 0 bis 1 Gew.-% bezogen auf den Füllstoff, zugesetzt werden. Weitere mögliche Hilfsmittel sind beispielsweise in Mengen von 0 bis 3 Gew.-Teile, bezogen auf die Polychloroprenkonzentration = 100 Gew.-Teile, einzusetzende organische Verdickungsmittel, wie Cellulosederivate, Alginate, Stärke, Stärkederivate oder Polyacrylsäure oder in Mengen von 0 bis 10 Gew.-Teile, bezogen auf die Polychloroprenkonzentration = 100 Gew.-Teile einzusetzende anorganische Verdickungsmittel, wie beispielsweise Bentonite. Zur Konservierung können der erfindungsgemäßen Klebstoffzusammensetzung auch Fungizide und Bakterizide zugesetzt werden. Diese kommen im allgemeinen in Mengen von 0 bis 1 Gew.-%, bezogen auf die Formulierung, zum Einsatz. Geeignete Fungizide sind beispielsweise Phenol- und Kresolderivate oder zinnorganische Verbindungen.

Auch klebrigmachende Harze, wie z.B. unmodifizierte oder modifizierte Naturharze wie Kolophoniumester, Kohlenwasserstoffharze oder synthetische Harze wie Phthalatharze können der Klebstoffzusammensetzung in aufgeschmolzener oder in dispergierter Form gegebenenfalls zugesetzt werden. Bevorzugt sind Alkylphenolharz-Dispersionen mit Erweichungspunkten größer 110°C. Organische Lösungsmittel wie beispielsweise Toluol, Xylol, Butylacetat, Methylethylketon, Ethylacetat, Dioxan, Aceton, Ethanol, Glycol, Glycerin oder deren Gemische oder Weichmacher wie beispielsweise solche auf Adipat-, Phthalat- oder Phosphatbasis können gegebenenfalls den Polychloropren- Dispersionen zugesetzt werden, vorteilhafter Weise wenn keinerlei Einschränkungen mit Bezug auf Fogging oder Grenzwertüberschreitungen sowie Kennzeichnungspflicht besteht.

Es ist ebenfalls möglich, dass die erfindungsgemäßen Formulierungen zusätzliche Aktivatoren enthalten, wie beispielsweise einwertige, zweiwertige oder dreiwertige anorganische Salze, z.B. LiCl, KCl, NaCl, ZnCl₂, MgCl₂, CaCl₂, ZnO, MgO, FeCl₃, AlCl₃, Al₂(SO₄)₃ oder anorganische oder organischen Säuren, z.B. HCl, Borsäure, Phosphorsäure, sowie Essigsäure, Glycin oder andere geeignete Aminosäuren, Weinsäure, Zitronensäure, beziehungsweise deren Alkali- und Erdalkalisalze sowie beliebigen Kombinationen aus Salzen und Säuren, wie Puffersysteme, z.B. das einfache Natrium oder Kaliumsalz der Phosphorsäure (KH₂PO4), NaHCO₃ oder KHCO₃. Diese können zur Voraktivierung der wässrigen Polymer-Dispersionen eingesetzt werden, also zur Einstellung eines bestimmten Ausgangs-pH-Werts. Des Weiteren können die erfindungsgemäßen Formulierungen zusätzlich hydrophilierte Polyisocyanate auf Basis von bevorzugt aliphatischen Isocyanaten enthalten z.B. IPDI oder HDI. Dazu geeignet sind z.B. in Wasser dispergierbare Polyisocyanat-Zubereitungen aus einem aliphatischen Polyisocyanat und einem Umsetzungsprodukt eines aliphatischen Polyisocyanats mit einem ein- oder mehrwertigen, nichtionischen Polyalkylenetheralkohol als Emulgator z.B auf Basis von Isocyanuraten und Biureten und Allophanaten auf Basis von 1,6-Diisocyanatohexan (HDI) und/oder Isocyanurate auf Basis von 1-Isocyanato-3,5,5-trimethyl-5-isocyana-tomethyl-cyclohexan (IPDI). Ebenfalls sind entsprechend modifizierte Polyisocyanatgemische geeignet. Geeignet sind auch Polyisocyanate beziehungsweise Polyisocyanatgemische mit Isocyanuratstruktur auf Basis HDI, IPDI und/oder 4,4'-Diisocyanatodicyclohexylmethan.

Als nichtionische Emulgatoren sind auch mit Polyvinylpyrrolidon modifizierte Polyisocyanate geeignet. Als dispergieraktive Bausteine finden auch Carbonsäuregruppen enthaltende Polyalkylenoxidether Verwendung oder Polyetheresteralkohole.

Die erfindungsgemäßen Formulierungen können weitere Bestandteile aufweisen z.B. kolloidal verteilte nanodisperse Kieselsäuresuspensionen in Wasser (WO 03/102066, S. 3,. Z. 14 bis S. 6, Z.5), Ruße, andere dispergierbare Füllstoffe, Stabilisatoren wie z.B. Hydrolyse-Inhibitoren, Antioxidantien, Licht/UV Schutzmittel, Weichmacher, Verlaufshilfsmittel, Netzmittel, Verdicker oder Farbstoffe. Bevorzugt ist der Einsatz von nanodisperse Kieselsäuresuspensionen in Wasser. Besonders bevorzugt enthalten die erfindungsgemäßen Formulierungen nanodiperse Kieselsäuredispersionen in Mengen von bis zu 70 Gew.-%, bevorzugt bis zu 50 Gew.-% besonders bevorzugt bis zu 20 Gew.-% bezogen auf den Gesamtfeststoffgehalt der Formulierung.

Die erfindungsgemäßen Formulierungen weisen Topfzeiten von >5 Minuten, bevorzugt > 2 Stunden, besonders bevorzugt >8 Stunden und ganz besonders bevorzugt > 24 Stunden, bei einem pH-Wert < 10, bevorzugt < 9,5, besonders bevorzugt < 9 auf.

Unter Topfzeit ist im Sinne der vorliegenden Erfindung die Zeitspanne nach Herstellung der erfindungsgemäßen Formulierung definiert, in der > 50% der Initialfestigkeit erhalten wird (gemessen direkt nach Verklebung der Substrate) gegenüber der optimalen Festigkeit, die mit dieser Klebstoffformulierung in Zusammenhang mit gegebenen Substraten erreicht werden kann.

Die Viskositäten der erfindungsgemäßen Formulierungen können beliebig über einen weiten Bereich eingestellt werden. Die erfindungsgemäßen Formulierung weisen eine Viskosität von 1-200000 mPas, bevorzugt 5-100000 mPas, besonders bevorzugt 10-10000 mPas, besonders bevorzugt 20-5000 mPas und ganz besonders bevorzugt 50-4000 mPas auf.

Die erfindungsgemäßen Formulierungen weisen eine Feststoffkonzentration von 10 bis 80 Gew.-%, bevorzugt von 20 bis 70 Gew.-% besonders bevorzugt von 25 bis 65 Gew.-% und ganz besonders bevorzugt von 30 bis 60 Gew.-% auf.

Ebenfalls Gegenstand der vorliegenden Erfindung ist ein Verfahren zur Herstellung der erfindungsgemäßen Formulierung, dadurch gekennzeichnet, dass einer wässrigen Polymer-Dispersion, enthaltend eine anionisch-stabilisierte Polychloropren-Dispersion, Kohlendioxid bei 1-100°C und 0,8-10 bar in einer Menge, pro Liter Formulierung, von 0,1 bis 20 Liter, bevorzugt von 0,2 bis 10 Liter, besonders bevorzugt von 0,5 bis 5 Liter, ganz besonders bevorzugt 0,8 bis 3 Liter zugeführt werden.

Die Zuführung der Volumina an Kohlendioxid kann dabei zum Beispiel durch Überlagern der Dispersion innerhalb eines elastischen Gefäßes erfolgen. Beispielsweise kann ein Gefäß von 20 Liter Volumen mit X < 18 Litern Dispersion (eventuell unter Luftausschluss) befüllt werden und im Anschluss mit 20-X Litern Kohlendioxid aufgefüllt werden. Nach Schütteln oder Rühren oder Lagern des Gefäßes bis zur gewünschten Volumenabnahme der Kohlendioxid Gasphase durch Aufnahme in die Dispersion, ist die wässrige Polymer-Dispersion aktiviert. Gegebenenfalls wird überstehendes Kohlendioxid abgelassen.

Die Zuführung von Kohlendioxid erfolgt beispielsweise durch Einleiten, Durchleiten, Überleiten oder Überlagern, mittels statischer oder dynamischer Mischer, innerhalb von Mischrohren, auch als Trägergas oder Treibgas. Dabei dienen als Kohlendioxid-Quellen z.B. Druckgasbehältnisse wie Flaschen, Kartuschen oder Patronen, chemische Reaktionen von z.B. Alkalikarbonaten mit geeigneten Säuren in situ, mit Kohlendioxid gesättigten Flüssigkeiten (z.B. Wasser, Mineralwasser, Softdrinks) oder auch Kohlendioxid gewonnen aus der Sublimation von Trockeneis oder ein reversibler Kohlendioxid Adsorber. Bevorzugt sind mechanisch berührungslose Verfahren wie Überleiten oder Überlagern, wobei die zu aktivierende Formulierung nicht mit der Dosiereinheit in Kontakt kommt. Somit wird eine Verunreinigung oder Verstopfung der Dosiereinheit durch eventuelle Bildung von Koagulat vermieden. Ebenfalls bevorzugt ist die Nutzung von Kohlendioxid direkt als Trägergas oder Treibgas für die Applikation, zum Beispiel in Form von Spraydosen enthaltend die Formulierung und Kohlendioxid in separaten Phasen oder die Vermengung von Polymer-Dispersion und Kohlendioxid in einem definierten Strömungsbereich, zum Beispiel mittels eines statischen Mischers oder simplen Schlauchstücks geeigneter Länge vor der Applikation. Bevorzugt ist die Dosierung von Kohlendioxid mittels einfacher mobiler Ventilsysteme in Analogie zu Fahrrad und Automobilreifenventilen aus einer Druckflasche, Kartusche oder Patrone, wobei die Ventilsysteme auf die Verpackung der Klebstoff-Formulierungen zum Beispiel reversibel aufmontiert werden können. Nach der Füllung der gewünschten Mengen an Kohlendioxid, kann im Bedarfsfall der Originalverschluss wieder aufgesetzt und der Behälter bis zur Sättigung der Formulierung mit dem zudosierten Kohlendioxid geschüttelt, gerührt und gelagert werden. Der Aktivierungsverlauf kann bei flexiblen Behältern bequem an der Volumenabnahme des Gefäßes verfolgt werden.

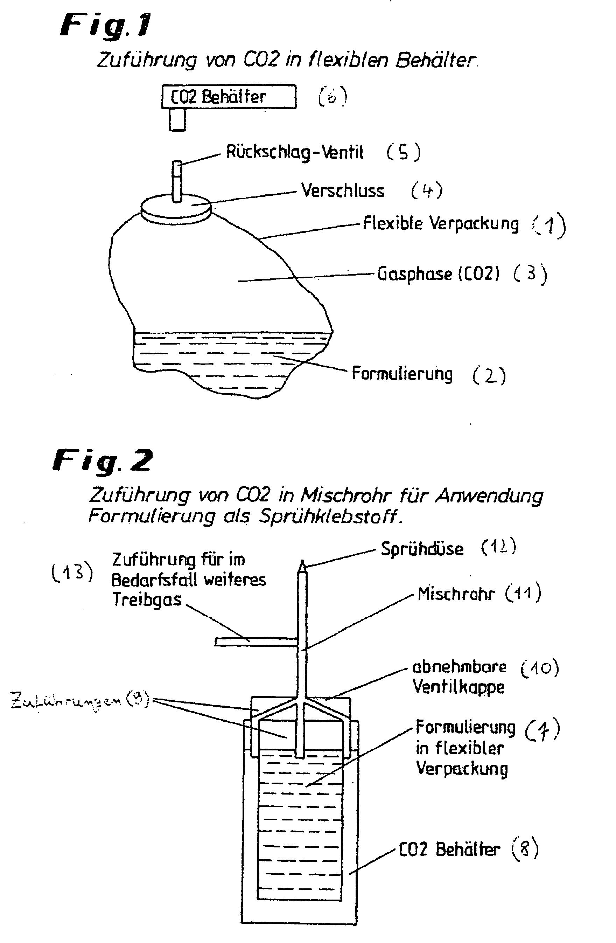

Bevorzugt wird eine Vorrichtung zur Dosierung von Kohlendioxid in wässrige Polymer-Dispersionen eingesetzt, dadurch gekennzeichnet, dass ein Behälter bzw. flexible Verpackung (1), eine wässrige Phase aus einer Polymer-Dispersion bzw. Formulierung (2) sowie eine Kohlendioxid-Gasphase (3) enthält, mit einem Verschluss (4) an dessen Ende ein Rückschlag-Ventil (5) angebracht ist durch das Kohlendioxid aus einem geeigneten Kohlendioxidbehälter (6) eingebracht werden kann (Figur 1).

Bevorzugt findet die Zuführung von Kohlendioxid mittels Gasflasche vor Applikation der erfindungsgemäßen Formulierung in einem Zeitraum von < 14 Tagen, Bevorzugt < 7 Tage, besonders bevorzugt < 1 Tag und ganz besonders Bevorzugt < 8 Stunden statt. Erfolgt die Zuführung des Kohlendioxids in einem Zeitraum von < 7 Tagen vor der Applikation, wird im Rahmen dieser Erfindung diese Formulierung als 2-Komponenten-Formulierung definiert. Erfolgt im Sinne der Erfindung die Zugabe von Kohlendioxid ≥ 7 Tage vor der Applikation der Formulierung und der Verklebung der Substrate und hat die Formulierung auch nach 7 Tagen Topfzeit keinen signifikanten Verlust in ihren Klebstoffeigenschaften gemäß der Definition Topfzeit zu verzeichnen, so wird im Folgenden von einer 1-Komponenten-Formulierung gesprochen.

Bei den erfindungsgemäßen Formulierungen handelt es ich bevorzugt um Klebstoffformulierungen. Bevorzugt werden diese als 1K-Formulierungen oder 2K-Formulierungen eingesetzt.

Die erfindungsgemäßen Formulierungen werden mittels Streichen, Walzenauftrag, Sprühauftrag, Siebdruck, Stempeln, Spincoating, Electrospinnen oder anderen bekannten Applikationsvarianten auf ein beliebiges Substrat aufgetragen. Dabei kann die Aktivierung mit Kohlendioxid vor der Applikation vor Ort durchgeführt werden und der Grad der Aktivierung eingestellt werden, damit auch die Stabilität und Topfzeit sowie auch die Konzentration und Viskosität durch eventuelle Verdünnung der Formulierung mit z.B. Wasser den Applikationsbedürfnissen angepasst werden kann.

Die erfindungsgemäßen Formulierungen weisen eine pH-Wertstabilität nach DIN 53381, Methode B, von >1h, bevorzugt von > 2h, besonders bevorzugt von > 3h und ganz besonders bevorzugt von > 4h auf.

Klebungen von Substraten erhalten durch Verwendung der erfindungsgemäßen Formulierungen nach beidseitiger Applikation der Formulierungen auf die zu verklebenden Substrate und Verpressung der Substrate unter Druck von 4bar und 10 sec nach Trocknungszeiten bei 50% Luftfeuchtigkeit und 23°C von < 20 min, bevorzugt < 10 min, besonders bevorzugt <5 min, ganz besonders bevorzugt < 1 min weisen eine Initialfestigkeit von > 0,3 N/mm, bevorzugt von > 0,5 N/mm und besonders bevorzugt von > 0,8 N/mm im 180° Peeltest bei 23°C auf, soweit die Festigkeit und Elastizität des Substrates diese Messung zulässt.

Geeignete Substrate sind solche, die von der erfindungsgemäßen Formulierung mit einem Kontaktwinkel von > 30°, bevorzugt von > 50°, besonders bevorzugt von > 70° benetzt werden. Als typische Substrate seien genannt offen oder geschlossen porige poröse Materialien mit Dichte < 1kg /Liter sowie Schäume auf Basis von Polyurethanen, Latexschäume (SBR, NBR, NR, PVC, CR), Polystyrol, Melaminformaldehydharzschäume und andere, sowie Stein, Keramik, Leder, Gewebe, Gewirke, Geflechte, Gelege, Thermoplasten, Elastomere, Elastomervulkanisate, thermoplastische Elastomere, thermoplastische Urethane, thermoplastische Vulkanisate, Duromere, Holz, Kompositematerialien, Metalle, lackierte Bleche sowie beliebige Kombinationen der genannten Materialien in unterschiedlichsten Ausführungsformen untereinander.

Die erfindungsgemäßen Formulierungen können auch zur Herstellung geschäumter, gegebenen-falls klebrige Dicht- und Därnmstoffe, sowie zur Herstellungen von Formteilen, Beschichtungen, Klebschäumen oder zur Herstellung von Tauchartikel verwendet werden.

Die Schäumung der Formulierungen erfolgt mittels eines Trägergases, z.B. N2, N2O, O2, Luft, Butan, fluorierte und perfluorierte Treibgase, bevorzugt ist Kohlendioxid. Der Schaum kann dabei auch aus einer Sprühdose appliziert werden.

Ebenfalls kann eine erfindungsgemäße Formulierung als Klebstoff in Form eines Aerosols mit Hilfe einer Spraydose auf Substrate appliziert werden. Bevorzugt erfolgt dabei der Austritt des Produktes aus einer austauschbaren Düsen und Mischrohrkombination, in der die Vermengung der Ausgangsdispersion und des Trägergases Kohlendioxid zur Herstellung der erfindungsgemäßen Formulierung räumlich getrennt von den Vorratsbehältern erfolgt, so dass die Auslassventile für die Dispersion und Kohlendioxid nicht mit der erfindungsgemäßen Formulierung in Berührung kommen oder alternativ ein Ventil einen Rückschlag zu den Vorratsgefäßcn verhindert.

Bevorzugt ist in der erfindungsgemäß verwendeten Vorrichtung um den Behälter (7) enthaltend die Ausgangsdispersion bzw. Formulierung ein weiterer hohler Behälter (8) angebracht, der das gasfürmige Kohlendioxid enthält, wobei getrennte Zuführungen (9) sowohl zu dem Behälter (7) als auch (8) bestehen, die in einer gegebenenfalls abnehmbaren Ventilkappe (10) enden, an deren Ende nach einer austauschbaren Mischstrecke **z.** B. in Form eines Mischrohrs oder Statikmischers (11) eine gegebenenfalls ebenfalls austauschbare Sprüh- oder Schaumdüse (12) sitzt. Im Bedarfsfall kann zusätzliches Treib/Träger-Gas aus einer separaten Zuführung (13) zudosiert werden (Figur 2).

Bevorzugt ist ebenso eine analoge Vorrichtung zu Figur 2 wobei Behälter (8) innerhalb des Behälters (7) bei sonst analoger Funktionsweise gelagert ist.

Gegenstand der vorliegenden Erfindung ist auch die Verwendung der erfindungsgemäßen Formulierungen zur Herstellung von Hydrogelen. Die Hydrogele sind erhältlich aus der erfindungsgemäβen Formulierung nach Versetzen mit Kohlendioxid und Überschreiten der Topfzeit.

Die kontrollierte Gelierung der erfindungsgemäßen Formulierung zu Hydrogelen nach Aktivierung durch Kohlendioxid führt zu einem stabilen, nicht porösen Hydrogel mit ungewöhlich geringem Schrumpf und gutem Druckverformungsrest mit Härten von 1-100 Shore A, bevorzugt 5-90 Shore A, besonders bevorzugt 20-80 Shore A. Dieses Hydrogel eignet sich als fugenfüllendes Dicht- und Dämmmaterial, sowie als beliebige Formen füllender Formkörper. Mögliche Einsatzgebiete für dieses Hydrogel sind z.B. als Fugen- und Dichtmaterial, als statisches Lager, als dynamischer Dämpfer, als Bodenbelag oder als Ausgussmassen, Vorteilhaft ist, dass das Hydrogel in beliebig einstellbarer Viskosität zuerst innerhalb der Topfzeit gießbar ist und erst nach der Topfzeit gleichmäßig aushärtet.

In einer besonderen Ausführungsform kann die erfindungsgemäße Formulierung nach Verfestigung bei Raumtemperatur zum Hydrogel zusätzlich Selbstvulkanisation zeigen, zum Beispiel durch Zusatz von Ultrabeschleunigern zu den erfindungsgemäßen Formulierungen, und / oder in Kombination mit ZnO, und / oder durch Einsatz von hydrophilierten Isocyanaten. Auf diese Weise sind stabile raumtemperaturvernetzte Hydrogele auf Basis von Polychloropren in einem weiten Härte und Elastizitätsbereich zugänglich.

Aus den erfindungsgemäßen Formulierungen lassen sich außerdem nach Aktivierung mit Kohlendioxid durch erleichterte Koagulation und Abscheidung in Tauchbädem z.B. Handschuhe, Kondome, Luftballons oder ähnliche durch Tauchverfahren gefertigte Artikel herstellen.

Ein Vorteil der erfindungsgemäßen Formulierung ist, dass eine Koagulation vor Applikation (bei Topfzeiten > 5 min) sicher vermieden werden kann. Bei den erfindungsgemäßen Formulierungen handelt es sich um metastabile, hochreaktive Klebstoffformulierungen mit einer breiten Variabilität von Viskosität und Feststoffgehalt, die über hervorragende Benetzungs- und Nass-in-Nass-Klebeigenschaften verfügen.

Weiterer Vorteil der erfindungsgemäßen Formulierungen ist, dass bei Überschreitung der Topfzeit und Verfestigung zum Hydrogel diese nach aktueller Gesetzgebung nicht als Sonderabfälle entsorgt werden müssen. Weiter können verfestigte Abfälle einer Wiederverwertung nach Vermahlung und Trocknung als Gummimehl oder als Rohstoff lösungsmittelbasierter Klebstoffformulierungen zugeführt werden.

Der erfindungsgemäße Einsatz von Kohlendioxid als Aktivierungsmittel hat darüber hinaus im Gegensatz zu anderen gebräuchlichen Aktivierungsmitteln keinen signifikanten negativen Einfluss auf die toxikologischen Eigenschaften, die Wasserquellung sowie klebtechnische Kenngrößen wie Festigkeit, Temperaturbeständigkeit, Alterungsbeständigkeit, Erweichungspunkt der erfmdungsgemäßen Formulierung und der daraus erzeugten erfindungsgemäßen Verklebung.

Ein weiterer, wesentlicher Vorteil von Kohlendioxid als Aktivierungsmittel liegt in der antibakteriellen Wirkung von Kohlendioxid, wodurch eine zusätzliche antibakterielle und fungizide Ausrüstung der Formulierung häufig vermieden werden kann.

Weiter kann bei den erfindungsgemäßen Formulierungen ein hoher Alterungsgrad in Kauf genommen werden. Die aus der Alterung folgende Hydrolyse der allylischen Chloratome und ein folglich gesenkter pH-Wert kann durch den flexiblen Einsatz von Kohlendioxid gezielt ausgeglichen werden, ohne dass daraus Qualitäts- und Eigenschaftsschwankungen in der Klebung oder Applikation folgen müssen.

### Beispiele: A. Eingesetzte Stoffe:

**Tabelle 1: Polychloroprendispersionen**

| **Produkt** | **Lieferant** |
|---|---|
| Dispercoll^{®} C 84, Feststoffgehalt 55%, pH 13, schnell kristallisierend | BMS AG, Lev., DE |
| Dispercoll^{®} C 74, Feststoffgehalt 58%, pH 13, normal kristallisierend | BMS AG, Lev., DE |
| Dispercoll^{®} C VPLS 2372H, Feststoffgehalt 58%, pH 13, langsam kristallisierend | BMS AG, Lev., DE |
| Dispercoll^{®} C VPLS 2325, Feststoffgehalt 55%, pH 13, schnell kristallisierend | BMS AG, Lev., DE |
| Dispercoll^{®} C XP 2694, Feststoffgehalt 29%, pH 9, schnell kristallisierend | BMS AG, Lev., DE |

**Tabelle 2: Kieselsäure Suspensionen**

| **Produkt** | **Lieferant** |
|---|---|
| Dispercoll^{®} S3030, Feststoffgehalt 30% | BMS AG, Lev., DE |

**Tabelle 3: Stabilisatoren**

| **Produkt** | **Lieferant** |
|---|---|
| Rhenofit^{®}DDA-EM 50, dispergiertes styrolisiertes Diphenylamin Derivat | Lanxess AG, Lev., DE |
| Borchers^{®} VP 9802, ZnO als 30%tige Dispersion | OMG Borchers GmbH, Langenfeld , DE |

**Tabelle 4: Isocyanat-Vernetzer**

| **Produkt** | **Lieferant** |
|---|---|
| Bayhydur^{®} 401/ 70, Hydrophil modifiziertes aliphatisches Polyisocyanat auf Basis von Isophorondiisocyanat 70% | BMS AG, Lev, DE |

**Tabelle 5: Zusatzstoffe**

| **Produkt** | **Lieferant** |
|---|---|
| Levanyl^{®} rot, grün, blau, Pigmente | Lanxess AG, Leverkusen, DE |
| Kohlendioxid verschiedene Druckgasflaschen / Kartuschen Food grade, sowie Trockeneis, Citronensäure (Pulver) + Natriumhydrogenkarbonat (Pulver) + Wasser im Verhältnis 1,5:1:50. | |
| Borchigel^{®} Ala, Verdicker | OMG Borchers GmbH, Langenfeld, DE |
| Plextol^{®} 4545, Polystyrol-Acrylat dispersion, 50% | Polymerlatex GmbH, Marl, DE |
| Glycin, Aminosäure | Merck, PA Qualität |

### B) Messmethoden

### Bestimmung der Viskosität:

Die Viskosität der Dispersionen wird mittels Brookfield Viskosimeter typischerweise bei RT und 60 Umdrehungen/min mit Spindel 2 ermittelt. Entsprechend der gefundenen Viskositäten werden die Spindel und Umdrehungsgeschwindigkeit nach Vorschrift Viskosimeter variiert um Messfehler zu minimieren. Zur Untersuchung von rheologischen Eigenschaften wird mit Vorteil bei verschiedenen Geschwindigkeiten immer der gleiche Messkörper (Spindel) eingesetzt.

### Bestimmung der HCl Stabilität:

Die Prüfung der getrockneten Klebstoffproben erfolgt nach DIN 53381, Methode B.

Durchführung der Messung:
Messgerät: 763 PVC - Thermomat der Firma Metrohm, CH-9101 Herisau, Schweiz

Die Proben (Dicke 0,1-1 mm) werden auf eine Kantenlänge von ca. 2-3 mm geschnitten, 0,2 g in ein Reagenzglas eingewogen und die Messung bei 180°C und Luft als Trägergas durchgeführt. Gemessen wird der elektrische Widerstand von Wasser, in dem sich das gebildete HCl-Gas wieder löst. Als HCl-Stabilität wird der Zeitpunkt angegeben bei dem der elektrische Widerstand den Wert von 50 µS/cm erreicht hat. Je höher der Wert ist, um so stabiler ist die gemessene Probe gegenüber HCl-Abspaltung.

### Bestimmung der Reaktivität bezüglich des nass-in-nass Klebens mittels Sprühapplikation auf Polyurethan Schaumkörper:

Die Klebstoffformulierung wird mittels Walther PILOT Typ: XIII-ND. Sprühpistole bei ca. 3 bar Luftdruck auf das Prüfmaterial aufgebracht. Als Prüfmaterial werden PU-Schaumkörper wie folgt verwendet: Schaumqualität: STN / Schaumstoff-Technik-Nürnberg GmbH, Typ: ST 5540, Abmessung Prüfkörper: 101x49x30 mm Materialbasis: PUR, Farbe: weiß, Bruttogewicht (kg pro m3): 40; Nettorohdichte (kg pro m³) ISO-845: 38; Stauchhärte 40% (kPa) DIN EN ISO 3386: 5,5; Zugfestigkeit (kPa) DIN EN ISO 1798: >120; Bruchdehnung (%) ISO-1798: > 110; Druckverformungsrest (50%/70°C/C22h) DIN EN ISO-1856: <4.

Zur Beurteilung der Klebbarkeit und Anfangsfestigkeit werden die Probekörper sofort und nach unterschiedlichen Trocknungszeiten nach dem Klebstoffauftrag von ca. 50-150g / m² nass mit einem Holzstab in der Mitte geknickt und durch 2 Stahlrollen mit Abstand von 10mm innerhalb von < 3 sec. durchgeführt. Die minimale Wartezeit bis die Klebung eine ausreichende Sofortfestigkeit hat, so dass die Rückstellkräfte des Schaums die Klebung nach Durchgang durch den Spalt nicht mehr öffnet, wird festgehalten, sowie die längste Zeit bei der eine erfolgreiche Klebung noch möglich ist (offene Zeit).

In einer alternativen Verfahrensweise wird die Klebstoffformulierung (wobei die Viskosität der Klebstoffformulierung < 100 mPas sein muss) mittels Wagner W 550 Feinsprühsystem mittels Kleinstmengendüse oder analoger Gebläse betriebener "druckloser (<0,5 bar)" Applikationssysteme aufgetragen. Die Prüfung der Klebbarkeit und Anfangsfestigkeit erfolgt analog oben.

### Bestimmung der Wärmebeständigkeit an Schaumverklebungen:

Die wie oben beschriebenen Schaumverklebungen werden in einem auf 70°C bzw. 90°C bzw. 100°C bzw. 120°C vorgeheiztem Heißluftofen getempert und die Zeit bis zum Versagen der Klebung bestimmt.

### Bestimmung des Feststoffgehaltes der Formulierungen:

Die Prüfung erfolgt durch Einwaage von ca. 10g Formulierung auf ein Filterpapier in einem Aluschälchen und Trocknung für 1h bei 110°C im Umlufttrockenschrank. Die getrocknete Probe wird ausgewogen und aus der Differenz zur Einwage der Feststoffgehalt bestimmt.

### Bestimmung der Stabilität von Formulierungen:

Die Stabilität von Formulierungen wird optisch bei hochviskosen Formulierungen durch Suche nach Partikeln, Verklumpungen und bei niedrigviskosen Formulierungen durch Filtrieren durch < 600 Mikrometer Maschen Sieb durchgeführt.

### Bestimmung der Topfzeit von Formulierungen:

Zur Bestimmung der Topfzeit der Formulierungen wird diese nach Aktivierung (Fertigstellung der Formulierung) zum Verkleben von Satra Leder durch beidseitigen Auftrag auf 2*10 cm Streifenprüfkörper nach 10min Trocknungszeit, Verpressen unter 2 bar für 5sec und anschließender Messung der Initialtfestigkeit mittels 180° Peeltest in N/mm ausgeprüft. Dieses Verfahren wird nach 30min, 1h, 4h, 8h, 24h, 3d, 7d, 14d wiederholt. Werden Festigkeiten > 50% der optimalen Festigkeit erhalten, so gilt die Formulierung noch als innerhalb der Topfzeit. Es werden jeweils 3 Einzelmessungen durchgeführt.

### Bestimmung der Schälfestigkeit an KASX Prüfkörper:

Die Prüfung erfolgt gemäß EN 1392. auf zwei Prüfkörper (KASX-Gummi, gerauht, 100 x 30 mm) wird ein 100 µm dicker Nassfilm der Dispersion aufgetragen und wenn nicht anders beschrieben 1 Stunde bei Raumtemperatur gelüftet. Anschließend werden die Prüflinge 10 Sekunden lang mit 4 bar zusammengefüge. Es erfolgt eine Reißprüfung mittels 180° Peel Test auf einer handelsüblichen Zugprüfmaschine bei Raumtemperatur. Es werden die Festigkeitswerte in N/mm sofort nach der Verklebung und gegebenenfalls nach vorgegebenen Wartezeiten gemessen.

### Bestimmung der Wärmeformbeständigkeit:

Die KASX (NBR Gummi)-Prüfkörper werden mit einer Überlappung von 2 cm² verklebt, mit 4 kg belastet und in einem Heizschrank innerhalb von 30 min. auf 40°C temperiert. Anschließend werden die Prüfkörper mit einer linearen Heizrate von 0,5°C/min. auf 150°C aufgeheizt. Die Erweichungstemperatur, d.h. die Temperatur in °C bei der die Klebung unter der 4 kg Last im Scherversuch versagt, wird registriert. Es werden jeweils 5 Einzelmessungen durchgeführt.

### Bestimmung des pH-Wertes:

In die zu prüfende Dispersion bzw. Lösung wird eine Einstab-Messelektrode (z.B. Sentron pH-Meter) eingetaucht. Diese enthält eine Mess- und eine Bezugselektrode. Die zwischen Mess- und Bezugselektrode bestehende Potentialdifferenz wird als pH-Wert auf dem Messgerät abgelesen. Zur Handhabung der Einstab-Messelektrode ist die jeweilige Bedienungsanleitung des Herstellers zu beachten. Alternativ kann die pH-Wert Bestimmung mittels Messstäbchen oder Initiatorpapier erfolgen bzw. Mittels Indikatorlösung.

### Shore A Härte Bestimmung der Härte an Hydrogelen:

Dazu werden ca. 2*2*1 cm Prüfkörper aus den Hydrogelen herauspräpariert und mittels eines handelsüblichen Shore A Härtemessgerätes vermessen. Die Messung erfolgt an 3 Punkten, direkt nach Präparation des Prüfkörpers, sowie nach Trocknung von 90h bei 50°C im Umluftrockenschrank, der Mittelwert wird jeweils festgehalten.

### Bestimmung von Volumen / Massenkonstanz von Volumenkörpern/Hydrogelen:

Dazu werden ca. 2*2*1 cm Prüfkörper aus den Hydrogelen herauspräpariert, exakt vermessen und gewogen. Die Messung wird nach 90h Lagerung bei 50°C im Umlufttrockenschrank wiederholt und daraus Volumen und Massekonstanz errechnet.

### Bestimmung der Viskositätsstabiliät der Formulierungen nach Alterung:

Die Prüfung erfolgt durch wiederholte Viskositätsmessung an den Klebstoffformulierungen mittels Brookfield Viskosimeter nach vorzugsweise 3 Tagen Lagerung bei 70°C.

### D) Herstellverfahren:

### Herstellungsverfahren der erfindungsgemäßen Klebstoffformulierungen:

Allgemeines Verfahren zur Herstellung von Klebstoffformulierungen: Für die Herstellung erfindungsgemäßer Formulierung wird ein Latex als Einzelkomponente oder in Abmischung mit anderen Latices wie gewerblich erhältlich in einem Becherglas unter Rühren vorgelegt. Nacheinander werden dann bedarfsgemäß das Antioxidant und das Zinkoxid in Form einer Dispersion sowie weitere Bestandteile wie Harze, Tackifier, Füllstoffe, Verdicker, Farbstoffe unter Rühren zugegeben. Im Anschluss wird bedarfsgemäß das Kieselsol (Dispercoll^{®} S) unter Rühren zugesetzt. Die Konzentration der Formulierung wird bedarfsgemäß mittels entionisiertem Wasser auf den gewünschten Wert eingestellt.

### Allgemeines Verfahren zur Aktivierung von Klebstoffformulierungen

Im Anschluss nach Einmischung aller gewünschte Bestandteile erfolgt die Ausgangs-pH-Wert Einstellung mittels Glycin und/oder Borsäure und/oder beliebiger verdünnter Salze, Säuren oder Puffer geeignet zur Aktivierung der Formulierung unter Rühren bis auf den Ziel pH-Wert der Formulierungen. Die Verdünnung mit der die entsprechenden Salze und Säuren dabei eingesetzt werden, wird jeweils beschrieben.

Erfindungsgemäß erfolgt die endgültige Einstellung des pH-Wertes auf den Ziel pH-Wert mittels Kohlendioxid z.B. durch Einleiten oder Überlagern oder Durchleiten oder Mischen bis der Ziel pH erreicht ist, danach wird überschüssiges Kohlendioxid entfernt durch Spülen mit Luft.

Die Anteile [Gew.-Teile] der Formulierungen werden wenn nicht anders benannt als Feststoff bezogen auf den Feststoffanteil der Hauptkomponente (Polymerdispersion) = 100 Gew.-Teile bezogen. Zum Teil kann die Hauptkomponente wenn aus verwandten Polymerdispersionen bestehend auch gestückelt werden, wobei insgesamt wieder 100 Gew.-Teile erhalten werden.

Alternativ können Volumenanteile der Formulierungen ausdrücklich benannt werden.

### E) Beispiele

Nicht erfindungsgemäße Versuche sind im Folgenden immer mit* hinter der Versuchsnummer gekennzeichnet.

Trocknungszeit (1) bedeutet Wartezeit nach Klebstoffauftrag bis zur erfolgreichen Verklebung von PU-Schäumen [min.]. Applikation erfolgt ca. 1h nach Fertigstellung der Klebstoffformulierung.

Trocknungszeit (2) bedeutet Wartezeit nach Klebstoffauftrag bis zur erfolgreichen Verklebung von PU-Schäumen [min.]. Applikation erfolgt ca. 20h nach Fertigstellung der Klebstoffformulierung. Trocknungszeit (3) bedeutet Wartezeit nach Klebstoffauftrag bis zur erfolgreichen Verklebung von PU-Schäumen [min.]. Applikation erfolgt ca. 120h nach Fertigstellung der Klebstoffformulierung.

Trocknungszeit (4) bedeutet Wartezeit nach Klebstoffauftrag bis zur erfolgreichen Verklebung von PU-Schäumen [min.]. Applikation erfolgt ca. 720h nach Fertigstellung der Klebstoffformulierung.

**Tabelle 6: Untersuchung des Einflusses des pH-Wertes auf die notwendige Wartezeit/Trocknungszeit bis zur erfolgreichen Verklebung von Schaumstoffen.**

| **Zusammensetzung** | **1*** | **2*** | **3*** | **4*** | **5** | **6** | **7** | **8** | **9** |
|---|---|---|---|---|---|---|---|---|---|
| Dispercoll^{®} C 84 | 100 | 100 | 100 | 100 | 100 | 100 | 100 | 100 | 100 |
| Glycinpulver | | 2 | 4 | 10 | | | | | |
| Rhenofit^{®} DDA EM 50 | 2 | 2 | 2 | 2 | 2 | 2 | 2 | 2 | 2 |
| CO₂ | | | | | ja | ja | ja | ja | ja |

| **Ergebnisse:** | | | | | | | | | |
|---|---|---|---|---|---|---|---|---|---|
| pH-Wert nach 1 h | 12,3 | 9,3 | 9,0 | 8,7 | 9,5 | 9 | 8,5 | 8 | 7,5 |
| pH-Wert nach 20 h | 12,3 | 9,2 | 9,0 | 8,7 | 9,4 | 9,2 | ## | ## | ## |
| Feststoffgehalt [%] | **54,9** | **55,4** | **55,8** | **57,2** | **54,9** | **54,9** | **54,9** | **54,9** | **54,9** |
| Viskosität [mPa*s] | 98 | 92 | 91 | 95 | 94 | 64 | 70 | 75 | 85 |
| Trocknungszeit (1) | **25** | **0,25** | **0,25** | + | **1** | **0,25** | + | + | + |
| Trocknungszeit (2) | **30** | **0,25** | **0,25** | # | **1** | + | ## | ## | ## |

| | | | | | | | | | |
|---|---|---|---|---|---|---|---|---|---|
| + sofort verklebbar, # koaguliert, ## verfestigt | | | | | | | | | |

Der erfindungsgemäße Einsatz von Kohlendioxid zur Aktivierung von Klebstoffformulierungen erlaubt auf einfache und günstige Art und Weise die Einstellung vorteilhafter Nass in Nass Kleb-Eigenschaften ersichtlich in den niedrigen notwendigen Wartezeiten vor Kontaktierung der Substrate mit ausreichender Stabilität bis zur Applikation. Nach Verfestigung der Klebstoffformulierung kann diese vorteilhaft analog Polychloropren Festkautschuk entsorgt bzw. wiederverwertet werden.

**Tabelle 7: Untersuchung des Einflusses verschiedener Rohstoffe auf die Aktivierbarkeit mittels herkömmlicher Reagenzien im Vergleich zum Einsatz von CO₂ auf die notwendige Wartezeit/Trocknungszeit bis zur erfolgreichen Verklebung von Schaumstoffen**

| **Zusammensetzung** | **10*** | **11** |
|---|---|---|
| Dispercoll^{®} C XP 2694 | 100 | 100 |
| CO₂ | | ja |

| **Ergebnisse:** | | |
|---|---|---|
| pH-Wert nach 1 h | 9 | 8 |
| pH-Wert nach 20 h | 9,0 | 8,2 |
| Feststoffgehalt [%] | 29,0 | 29,0 |
| Viskosität [mPa*s] | <10 | <10 |
| Trocknungszeit (1) | 0,5 | 0,3 |
| Trocknungszeit (2) | 0,5 | 0,3 |

Der erfindungsgemäße Einsatz von Kohlendioxid zur Aktivierung von Klebstoffformulierungen erlaubt auf einfache und günstige Art und Weise die Einstellung vorteilhafter Nass in Nass Kleb-Eigenschaften ersichtlich in den niedrigen notwendigen Wartezeiten vor Kontaktierung der Substrate mit ausreichender Stabilität bis zur Applikation.

**Tabelle 8: Untersuchung des Einflusses der Konzentration der Formulierungen auf die Aktivierbarkeit mittels herkömmlicher Reagenzien im Vergleich zur erfindungsgemä-ßen Formulierung auf die notwendige Wartezeit/Trocknungszeit bis zur erfolgreichen Verklebung von Schaumstoffen**

| **Zusammensetzung** | **12*** | **13*** | **14** | **15** | **16** | **17** | **18** |
|---|---|---|---|---|---|---|---|
| Dispercoll^{®} C 84 | 100 | 100 | 100 | 100 | 100ml | 100ml | 100ml |
| Glycinpulver | 4 | 10 | | | | | |
| Rhenofit^{®} DDA EM 50 | 2 | 2 | 2 | 2 | | | |
| CO₂ | | | ja | ja | ja | ja | ja |
| VE-Wasser | 145 | 145 | 145 | 145 | | | |
| Mineralwasser Gerolsteiner Sprudel™ classic | | | | | | 100ml | |
| Mineralwasser Gerolsteiner Sprudel™ medium | | | | | | | 100ml |
| Coca Cola™ | | | | | 100ml | | |

| **Ergebnisse:** | | | | | | | |
|---|---|---|---|---|---|---|---|
| pH-Wert nach 1 h | 8,9 | 8,5 | 9 | 8 | 8 | 8,9 | 9,5 |
| pH-Wert nach 20h | 8,9 | 8,5 | 9,0 | 8,1 | 8 | 8,9 | 9,5 |
| Feststoffgehalt [%] | 31,7 | 32,9 | 30,8 | 30,8 | 42 | 28,0 | 28,0 |
| Viskosität [mPa*s] | <10 | <10 | <10 | <10 | <30 | <30 | <30 |
| Trocknungszeit (1) | 0,25 | + | 0,25 | + | 0,25 | 0,5 | 1,5 |
| Trocknungszeit (2) | 0,25 | 0,25 | 0,5 | + | 0,25 | 0,5 | 1,5 |

| | | | | | | | |
|---|---|---|---|---|---|---|---|
| + sofort verklebbar | | | | | | | |

**Tabelle 9: Untersuchung des Einflusses verschiedener Rohstoffe der Formulierungen auf die Aktivierbarkeit mittels herkömmlicher Reagenzien im Vergleich zur erfindungsgemäßen Formulierung auf die notwendige Wartezeit/Trocknungszeit bis zur erfolgreichen Verklebung von Schaumstoffen. Weiter wird eine Nachaktivierung herkömmlicher Formulierungen mittels Kohlendioxid durchgeführt**

| **Zusammensetzung** | **19*** | **20** | **21*** | **22** |
|---|---|---|---|---|
| Dispercoll^{®} C 84 | | | 100 | 100 |
| Dispercoll^{®} C 2325 | 100 | 100 | | |
| Plextol^{®} 4545 | 25 | 25 | 30 | 30 |
| Bocherts^{®} ZnO VP 9802 | 1 | 1 | 1 | 1 |
| Borchigel^{®} Ala | | | | |
| Glycinpulver | 4 | | 4 | |
| Rhenofit^{®} DDA EM 50 | 2 | 2 | 2 | 2 |
| CO₂ | | ja | | Ja |

| **Ergebnisse:** | | | | |
|---|---|---|---|---|
| pH-Wert nach 1 h | 9 | 8,5 | 9 | 8,5 |
| pH-Wert nach 16 h | 9,0 | 8,6 | 9 | 8,5 |
| Feststoffgehalt [%] | 53,7 | 53,8 | 54,4 | 53,7 |
| Viskosität [mPa*s] | 4210 | 3860 | 4360 | 5500 |
| Trocknungszeit (1) | 0,5 | + | + | + |
| Trocknungszeit (2) | 0,25 | + | + | + |

| | | | | |
|---|---|---|---|---|
| + sofort verklebbar | | | | |

**Tabelle 10: Untersuchung des Einflusses des erfindungsgemäß eingestellten pH-Wertes der Formulierungen auf die Aktivierbarkeit und Stabilität der Formulierungen (Topfzeit) sowie auf die notwendige Wartezeit/Trocknungszeit bis zur erfolgreichen Verklebung von Schaumstoffen**

| **Zusammensetzung** | **23** | **24** | **25** | **26** | **27** | **28** | **29** | **30** |
|---|---|---|---|---|---|---|---|---|
| Dispercoll^{®} C 84 | | | 100ml | 100ml | 100ml | 100ml | 100ml | 100ml |
| Dispercoll^{®} C VP LS 2325 | 50ml | 50ml | | | | | | |
| Dispercoll^{®} C VPLS 2372H | 50ml | 50ml | | | | | | |
| CO₂ | ja | ja | ja | ja | ja | ja | ja | ja |
| VE-Wasser | | 100ml | | | | | | |
| pH-Wert nach 1 h | 7,3 | 7,3 | 8,2 | 8,9 | 8,5 | 8,1 | 9 | 9,6 |
| Feststoffgehalt [%] | 56 | 28 | 55 | 55 | 55 | 55 | 55 | 55 |
| Viskosität [mPa*s] | 110 | < 30 | 90 | 85 | 75 | 80 | 85 | 80 |
| Trocknungszeit (1) | + | 0,67 | + | + | + | + | 0,5 | >3 |
| Lagerung vor Applikation (h) Trocknungszeit [min] | (15) + (39)## | (15) 0,7; (39) > 20 | (20) >3; (48) ## | (20) >3; (48) # | (20) >3; (48) ## | (20) >3; (48) ## | (24) 0,5 | (16) > 3 |

| | | | | | | | | |
|---|---|---|---|---|---|---|---|---|
| + sofort verklebbar, # koaguliert, ## verfestigt | | | | | | | | |

Hier werden mit erfindungsgemäß eingestelltem pH-Wert hervorragende anfängliche Kontaktzeiten und Reaktivitäten erhalten wobei die Topfzeit mit dem eingestellten pH in der Tendenz sinkt.

**Tabelle 11: Untersuchung des Einflusses des erfindungsgemäß eingestellten pH Wertes der Formulierungen durch Variation der eingesetzten Volumina von Formulierung und Kohlendioxid auf die notwendigen Wartezeiten bis zur erfolgreichen Verklebung von Schaumstoffen**

| **Zusammensetzung** | **31** | **32** | **33** | **34** | **34** | **35** | **36** | **37** | **38** | **39** |
|---|---|---|---|---|---|---|---|---|---|---|
| Dispercoll^{®} C 84 (ml) | 50 | 100 | 150 | 200 | 250 | 300 | 350 | 400 | 450 | 500 |
| CO₂ (ml) | 500 | 450 | 400 | 350 | 300 | 250 | 200 | 150 | 100 | 50 |
| pH-Wert nach 20 h | | | | | | 8,9 | 9,1 | 9,4 | 9,6 | 10 |
| Feststoffgehalt [%] | 55 | 55 | 55 | 55 | 55 | 55 | 55 | 55 | 55 | 55 |

| **Ergebnisse:** | | | | | | | | | | |
|---|---|---|---|---|---|---|---|---|---|---|
| Trocknungszeit (1) | + | + | + | + | + | + | 0,5 | 0,8 | 3 | >5 |
| Trocknungszeit (2) | ## | ## | ## | ## | ## | > 4 | 0,5 | 0,75 | 3 | >5 |

| | | | | | | | | | | |
|---|---|---|---|---|---|---|---|---|---|---|
| + sofort verklebbar, ## verfestigt | | | | | | | | | | |

Hier werden mit sinkendem pH-Wert durch steigende Volumendosierung von Kohlendioxid hervorragende anfängliche Kontaktzeiten und Reaktivitäten erhalten. Nach abgelaufener Topfzeit wird ein festes Hydrogel erhalten, das nicht als Sonderabfall entsorgt werden muss.

**Tabelle 12: Untersuchung des Einflusses des erfindungsgemäß eingestellten pH-Wertes durch Kohlendioxid auf die Eigenschaften der Formulierungen zur Verklebung verschiedener Substrate**

| **Zusammensetzung** | **40*** | **41*** | **42** | **43*** | **44*** | **45** | **46*** | **47*** | **48** |
|---|---|---|---|---|---|---|---|---|---|
| Dispercoll^{®} C 84 | | | | 100 | 100 | 100 | | | |
| Dispercoll^{®} C VP LS 2325 | 70 | 70 | 70 | | | | 100 | 100 | 100 |
| Dispercoll^{®} C VPLS 2372H | 30 | 30 | 30 | | | | | | |
| Dispereoll^{®} S 3030 | 15 | 15 | 15 | 15 | 15 | 15 | 15 | 15 | 15 |
| Plextol^{®} 4545 nicht eingesetzt? | | | | | | | | | |
| Bocherts^{®} ZnO VP 9802 | 1 | 1 | 1 | 1 | 1 | 1 | 1 | 1 | 1 |
| Mit Glycin auf pH eingestellt | | 9 | | | 9 | | | 9 | |
| Rhenofit^{®} DDA EM 50 | 2 | 2 | 2 | 2 | 2 | 2 | 2 | 2 | 2 |
| Mit CO₂ auf pH eingestellt | | | 9 | | | 9 | | | 9 |

| **Ergebnisse:** | | | | | | | | | |
|---|---|---|---|---|---|---|---|---|---|
| pH-Wert | ca. 10 | 9 | 9 | ca. 10 | 9 | 9 | ca. 10 | 9 | 9 |
| Feststoffgehalt [%] | 49,8 | 51,0 | 50,0 | 49,2 | 50,0 | 49,0 | 49,2 | 50,0 | 49,0 |
| Peel Test Ergebnis (N/mm), Substrat KASX (NBR), Alter der Formulierung ca. 2h (5* geraut, 40 min getrocknet) | 1,6 | 1,8 | 2 | 2,1 | 2,2 | 2 | 1,8 | 1,9 | 1,5 |
| Softening point auf KASX (°C) | 76 | 73 | 75 | 59 | 57 | 57 | 91 | 85 | 88 |
| Peel Test Ergebnis (N/mm), Substrat Kanvas, Alter der Formulierung 10d, 5min Trocknung | | | | 1,2 | 1,32 | 1,45 | 1,45 | | |
| Peel Test Ergebnis (N/mm), Substrat Kanvas, Alter der Formulierung 10d, 1min Trocknung | 0,4 | 0,9 | 0,9 | 0,3 | 0,7 | 1,2 | | | |
| Peel Test Ergebnis (N/mm), Substrat Synthetisches Leder, Alter der Formulierung 10d, 2min Trocknung | | | | 0 | 0,1 | 0,7 | | | |

**Tabelle 13: Fortsetzung Tabelle 12**

| **Zusammensetzung** | **49*** | **50*** | **51** | **52*** | **53*** | **54** | **55*** | **56*** | **57** |
|---|---|---|---|---|---|---|---|---|---|
| Dispercoll^{®} C 84 | 70 | 70 | 70 | 100 | 100 | 100 | | | |
| Dispercoll^{®} C VP LS 2325 | | | | | | | 70 | 70 | 70 |
| Dispercoll^{®} C VPLS 2372H | 30 | 30 | 30 | | | | 30 | 30 | 30 |
| Dispercoll^{®} S 3030 | 15 | 15 | 15 | 15 | 15 | 15 | 14 | 14 | 14 |
| Plextol^{®} 4545 | | | | | | | 5 | 5 | 5 |
| Bocherts^{®} ZnO VP 9802 | 1 | 1 | 1 | 3,5 | 3,5 | 3,5 | 1 | 1 | 1 |
| Mit Glycin auf pH eingestellt | | 9 | | | 9 | | | 9 | |
| Rhenofit^{®} DDA EM 50 | 2 | 2 | 2 | 2 | 2 | 2 | 2 | 2 | 2 |
| Mit CO₂ auf pH eingestellt | | | 9 | | | 9 | | | 9 |
| pH-Wert | ca. 10 | 9 | 9 | ca. 10 | 9 | 9 | ca. 10 | 9 | 9 |
| Feststoffgehalt [%] | 49,8 | 51,0 | 50,0 | 48,2 | 49,0 | 48,0 | 50,1 | 51,0 | 50,1 |

| **Ergebnisse** | | | | | | | | | |
|---|---|---|---|---|---|---|---|---|---|
| Peel Test Ergebnis (N/mm), Substrat KASX, Alter der Formulierung ca. 2h (5* geraut, 40 min getrocknet) | 2,1 | 2,3 | 2,5 | 2,3 | 2,6 | 2,4 | 2,2 | 2,3 | 1,9 |
| Softening point auf KASX [°C] | 56 | 56 | 55 | 58 | 55 | 58 | 79 | 73 | 74 |
| Peel Test Ergebnis (N/mm), Substrat Kanvas, Alter der Formulierung 10d, 1 min Trocknung | 0,4 | 0,8 | 1 | 0,3 | 1,2 | 1,2 | 0,5 | 0,8 | 0,9 |

**Tabelle 14: Fortsetzung Tabelle 13**

| **Zusammensetzung** | **58*** | **59*** | **60** | **61*** | **62*** | **63** |
|---|---|---|---|---|---|---|
| Dispercoll^{®} C VP LS 2325 | 100 | 100 | 100 | 10 | 10 | 10 |
| Dispercoll^{®} C VPLS 2372H | | | | 90 | 90 | 90 |
| Dispercoll^{®} S 3030 | | | | 15 | 15 | 15 |
| Plextol^{®} 4545 | 25 | 25 | 25 | | | |
| Bocherts^{®} ZnO VP 9802 | 1 | 1 | 1 | 1 | 1 | 1 |
| Mit Glycin auf pH eingestellt | | 9 | | | 9 | |
| Rhenofit^{®} DDA EM 50 | 2 | 2 | 2 | 2 | 2 | 2 |
| Mit CO₂ auf pH eingestellt | | | 9 | | | 9 |
| pH-Wert | ca. 10 | 9 | 9 | ca. 10 | 9 | 9 |
| Feststoffgehalt [%] | 53,4 | 54,0 | 53,4 | 51,0 | 52,0 | 51,0 |

| **Ergebnisse:** | | | | | | |
|---|---|---|---|---|---|---|
| Peel Test Ergebnis (N/mm), Substrat KASX, (5* geraut, 40 min getrocknet) | 2,5 | 2,1 | 2,1 | 2,2 | 2,3 | 1,7 |
| Softening point auf KASX, Alter der Formulierung 5d (°C) | 75 | 73 | 81 | 50 | 52 | 51 |
| Peel Test Ergebnis (N/mm), Substrat Kanvas, Alter der Formulierung 10d, 5 min Trocknung | 0,6 | 0,9 | 0,9 | 0,4 | 0,9 | 0,8 |

Die erfindungsgemäßen Klebstoffformulierungen erlauben die Einstellung vorteilhafter Nass-in-Nass Klebeigensschaften, ersichtlich in den niedrigen notwendigen Wartezeiten vor erfolgreicher Verklebung der Substrate in Kombination mit guten Initialfestigkeiten. Besonders Vorteilhaft sind die Ergebnisse der mit Kohlendioxid aktivierten erfindungsgemäßen Formulierungen bei sehr kurzen Trocknungszeiten. Die aufgeführten erfindungsgemäßen Formulierungen zeigen durchweg gute bis sehr gute Topfzeiten.

**Tabelle 15: Untersuchung des Einflusses des Feststoffanteils auf.die Eigenschaften der erfindungsgemäßen Formulierungen hinsichtlich der notwendigen Wartezeiten bis zur erfolgreichen Verklebung von Schaumstoffen**

| **Zusammensetzung** | **64** | **65** | **66** | **67** | **68** | **69** | **70** | **71** | **72** | **73** |
|---|---|---|---|---|---|---|---|---|---|---|
| Dispercoll^{®} C 84 (ml) | 100 | 100 | 100 | 100 | 100 | 100 | | | | 100 |
| Dispercoll^{®} C VP LS 2325 (ml) | | | | | | | | 100 | | |
| Dispercoll^{®} C 74 (ml) | | | | | | | 100 | | | |
| Dispercoll^{®} C VPLS 2372H (ml) | | | | | | | | | 100 | |
| CO₂ | ja | ja | ja | ja | ja | ja | ja | ja | ja | ja |
| VE-Wasser (ml) | | 10 | 25 | 35 | 55 | 80 | | | | |

| **Ergebnisse:** | | | | | | | | | | |
|---|---|---|---|---|---|---|---|---|---|---|
| pH-Wert nach 1 h | 7,9 | 7,9 | 7,8 | 7,9 | 7,8 | 7,8 | 7,7 | 7,8 | 7,8 | 7,9 |
| pH-Wert nach 120 h | ## | 7,3 | 7,1 | 6,9 | 7 | 6,9 | 7,8 | ## | 7,9 | ## |
| Feststoffgehalt [%] | 55 | 50 | 45 | 40 | 35 | 30 | 58 | 55 | 58 | 55 |
| Viskosität [mPa*s] | 80 | <50 | <40 | <30 | <20 | <10 | 200 | ## | 180 | ## |
| Trocknungszeit (1) | + | + | + | + | + | + | + | + | + | + |
| Trocknungszeit (3) | ## | + | + | + | + | + | + | ## | + | ## |
| Trocknungszeit (4) | ## | ## | + | + | + | + | ## | ## | ## | ## |

| | | | | | | | | | | |
|---|---|---|---|---|---|---|---|---|---|---|
| + sofort verklebbar, ## verfestigt | | | | | | | | | | |

Die Stabilität der erfindungsgemäßen Formulierungen kann vorteilhaft durch Einstellung des pH-Wertes und der Polymerkonzentration gesteuert werden, wobei trotzdem hervorragende Nass-in-Nass Klebbeigenschaften erreicht werden.

**Tabelle 16: Untersuchung des Einflusses des Feststoffanteils auf die Eigenschaften der erfindungsgemäßen Formulierungen hinsichtlich der notwendigen Wartezeiten bis zur erfolgreichen Verklebung von Schaumstoffen**

| **Zusammensetzung** | **74** | **75** | **76** | **77** | **78** | **79** |
|---|---|---|---|---|---|---|
| Dispercoll^{®} C 84 (ml) | 200 | | | | | |
| Dispercoll^{®} C 74 (ml) | | 200 | | | | |
| Dispercoll^{®} C VPLS 2372H (ml) | | | 200 | | 100 | 50 |
| Dispercoll^{®} C VP LS 2325 (ml) | | | | 200 | 100 | 50 |
| CO₂ (ml) in 500ml Gefäß überlagert | 300 | 300 | 300 | 300 | 300 | 300 |
| VE Wasser | | | | | | 100 |

| **Ergebnisse:** | | | | | | |
|---|---|---|---|---|---|---|
| pH-Wert | 7,8 | 7,4 | 7,7 | 8 | 7,3 | 7,3 |
| pH-Wert nach (x) h | ## (20) | 7,9 (20) | 8 (20) | ## (20) | 7,9 (15) | 7,4 (15) |
| Feststoffgehalt [%] | 54,9 | 58,4 | 56,3 | 54,2 | 55,0 | 27,5 |
| Viskosität [mPa*s] | 57 | 53 | 38 | 65 | 75 | <10 |
| Trocknungszeit (1) | + | + | + | + | + | 0,6 |
| Trocknungszeit bis zur erfolgreichen Verklebung von PU-Schäumen [min.]. Applikation erfolgt ca. (x)h nach Fertigstellung der Klebstoffformulierung. | ## (120) | + (120) | + (120) | ## (120) | + (15) | 0,6 (15) |
| Trocknungszeit bis zur erfolgreichen Verklebung von PU-Schäumen [min.]. Applikation erfolgt ca. 480h nach Fertigstellung der Klebstoffformulierung. | ## | 0,75 | 0,3 | ## | | |

| | | | | | | |
|---|---|---|---|---|---|---|
| + sofort verklebbar, ## verfestigt | | | | | | |

Die erfindungsgemäßen Klebstoffformulierungen erlauben die Einstellung vorteilhafter Nass-in-Nass Klebeigenschaften auch in einem weiten Bereich an Feststoffkonzentrationen für verschiedenste Polychloropren basierte Dispersionen. Die Topfzeit hängt offensichtlich von der Kristallisationsgeschwindigkeit und Feststoffkonzentration der Dispersionen ab, je niedriger die Kristallisationsgeschwindigkeit und Feststoffkonzentration, desto länger die Topfzeit.

**Tabelle 17: Ergebnisse aus dem erfindungsgemäßen Verfahren zur Herstellung von Volumenformkörpern**

| **Zusammensetzung** | **80** | **81** | **82** | **83** | **84** |
|---|---|---|---|---|---|
| Dispercoll^{®} C 84 (ml) | 200 | | | 100 | |
| Dispercoll^{®} C 74 (ml) | | 200 | | 100 | |
| Dispercoll^{®} C VPLS 2372H (ml) | | | | | 100 |
| Dispercoll^{®} C VP LS 2325 (ml) | | | 200 | | 100 |
| CO₂, auf pH | 7,8 | 7,8 | 7,8 | 7,8 | 7,8 |

| **Ergebnisse:** | | | | | |
|---|---|---|---|---|---|
| Formulierungen werden nach pH-Wert Einstellung in einen offenen 200 ml Becher gegossen, Verfestigung nach (x) h | 3 | 96 | 1 | 6 | 6 |
| Härte Shore A nach 7 d gemessen vor Lagerung / Trocknung | 24 | 6 | 43 | 20 | 10 |
| Volumenschwund (%) nach 90 h Lagerung bei 50°C | 38 | 32 | 39 | 38 | 36 |
| Gewichtsverlust (%) nach 90 h Lagerung bei 50°C | 36 | 32 | 37 | 35 | 34 |
| Härte in Shore A nach 90 h Lagerung bei 50°C | 75 | 33 | 75 | 58 | 38 |
| Dichte in g/cm² nach 90 h Lagerung bei 50°C | 1,16 | 1,19 | 1,18 | 1,18 | 1,17 |

Nach dem erfindungsgemäßen Verfahren können Hydrogele und poröse Volumenkörper direkt aus kristallisierenden Dispersionen hergestellt werden, ohne Notwendigkeit einer vorherigen Überführung in Feststoffe mit anschließender Vulkanisation / chemische Vernetzung. Die so erhaltenen Volumenkörper sind, da nach Bedarf chemisch unvernetzt wertstoffrecyclebar z.B. durch mechanische Zerkleinerung und Verarbeitung in Lösungsmittelklebstoffen oder Gummibauteilen.

**Tabelle 18: Untersuchung der Aktivierbarkeit von Klebstoffdispersionen durch Einsatz von CO₂ als Treibgas**

| **Zusammensetzung** | **85*** | **86** | **87*** | **88** |
|---|---|---|---|---|
| Dispercoll^{®} C 84 | 100 | 100 | | |
| Dispercoll^{®} C XP 2694 | | | 100 | 100 |
| Glycin | 2 | 2 | | |

| **Ergebnisse:** | | | | |
|---|---|---|---|---|
| pH-Wert | 9,2 | 9,2 | 9 | 9 |
| Feststoffgehalt [%] | 56 | 56 | 29 | 29 |
| Viskosität [mPa*s] | 85 | 85 | <10 | <10 |
| Trocknungszeit (1) | | | | |
| Trägergas für Sprühapplikation war Pressluft | 0,5 | | 0,5 | |
| Trocknungszeit (1) | | | | |
| Trägergas für Sprühapplikation war CO₂ | | + | | 0,25 |

| | | | | |
|---|---|---|---|---|
| + sofort verklebbar, | | | | |

Nach dem erfindungsgemäßen Verfahren kann die Aktivierung durch CO₂ vorteilhaft auch erst unmittelbar vor der Applikation z.B. durch Nutzung von CO₂ aus Treib / Trägergas für eine Sprühapplikation oder Beimengung von CO₂ in den Trägergas/Substratstrom-erfolgen. Dabei wird wiederum eine Verbesserung der Nass-in-Nass Klebeigenschaften erreicht.

## Patentansprüche

1. Formulierung auf Basis einer wässrigen Polymer-Dispersion enthaltend >20 Gew.% einer anionisch-stabilisierten Polychloropren-Dispersion, wobei die Gesamtfeststoffkonzentration = 100 Gcw.-% gesetzt wird, **dadurch gekennzeichnet, dass** bei einem pH-Wert zwischen 6 und 10 der Anteil an gelöster Kohlensäure im Dissoziationsgleichgewicht zwischen 0,0001 bis 2 Gew.-%, bezogen auf die Dispersion, beträgt.

2. Formulierung gemäß Anspruch 1, **dadurch gekennzeichnet, dass** bei einem pH-Wert von 6,5 bis 9,5 der Anteil an gelöster Kohlensäure zwischen 0,001 bis 1 Gew.% beträgt.

3. Formulierung gemäß Anspruch 1, **dadurch gekennzeichnet, dass** die Alkaliionenkonzentration (Na⁺ + K⁺) 500 bis 10000 ppm beträgt.

4. Formulierung gemäß Anspruch 1, **dadurch gekennzeichnet, dass** diese hydrophilierte Polyisocyanate auf Basis von bevorzugt aliphatischen Isocyanaten enthalten.

5. Formulierung gemäß Anspruch 1, **dadurch gekennzeichnet, dass** diese nanodisperse Kicselsäuresuspensionen in Wasser enthalten.

6. Formulierung gemäß Anspruch 1, **dadurch gekennzeichnet, dass** diese eine pH-Wertstabilität nach DIN 53381, Methode B, von >1h aufweisen.

7. Verfahren zur Herstellung der Formulierung gemäß Anspruch 1, **dadurch gekennzeichnet, dass** einer wässrigen Polymer-Dispersion, enthaltend eine anionisch-stabilisierte Polychloropren-Dispersion, Kohlendioxid bei 1-100°C und 0,8-10 bar in einer Menge, pro Liter Formulierung, von 0,1 bis 20 Liter zugeführt werden.

8. Verfahren gemäß Anspruch 7, **dadurch gekennzeichnet, dass** die Zuführung der Volumina an Kohlendioxid durch Überlagern der Dispersion innerhalb eines elastischen Gefäßes erfolgt und das Gefäß anschließend bis zur gewünschten Volumenabnahme der Gasphase geschüttelt oder gerührt oder gelagert wird und gegebenenfalls überstehendes Kohlendioxid abgelassen wird.

9. Verwendung der Formulierungen gemäß Anspruch 1- zur Herstellung von Klebstaffformulierungen.

10. Verwendung der Formulierungen gemäß Anspruch 1 zur Herstellung von geschäumten, gegebenenfalls klebrigen Dicht- und Dämmstoffen, Volumenteilen, Beschichtungen, Klebschäume oder Tauchartikel.

11. Verwendung der Formulierungen gemäß Anspruch 1 zur Herstellung von Hydrogelen.

## Claims

1. Formulation based on an aqueous polymer dispersion comprising > 20% by weight of an anionically stabilized polychloroprene dispersion, where the total solids concentration is set at 100% by weight, **characterized in that** at a pH of from 6 to 10 the content of carbonic acid dissolved in the dissociation equilibrium is from 0.0001 to 2% by weight, based on the dispersion.

2. Formulation according to Claim 1, **characterized in that** at a pH of from 6.5 to 9.5 the content of dissolved carbonic acid is from 0.001 to 1% by weight.

3. Formulation according to Claim 1, **characterized in that** the alkali metal ion concentration (Na⁺ + K⁺) is from 500 to 10 000 ppm.

4. Formulation according to Claim 1, **characterized in that** these comprise hydrophilicized polyisocyanates based on preferably aliphatic isocyanates.

5. Formulation according to Claim 1, **characterized in that** these comprise nanodisperse silica suspensions in water.

6. Formulation according to Claim 1, **characterized in that** these have a pH stability of > 1h in accordance with DIN 53381, Method B.

7. Process for the production of the formulation according to Claim 1, **characterized in that**, per litre of formulation, an amount of from 0.1 to 20 litres of carbon dioxide is/are brought into contact at from 1 to 100°C and at from 0.8 to 10 bar with an aqueous polymer dispersion comprising an anionically stabilized polychloroprene dispersion.

8. Process according to Claim 7, **characterized in that** the contact with the volumes of carbon dioxide is achieved by blanketing of the dispersion within a resilient vessel and the vessel is then shaken or stirred or stored until the desired volume has been absorbed from the gas phase and, where appropriate, excess carbon dioxide is discharged.

9. Use of the formulations according to Claim 1 for the production of adhesive formulations.

10. Use of the formulations according to Claim 1 for the production of foamed, where appropriate adhesive sealing and insulating materials, voluminous components, coatings, adhesive foam or articles produced by dipping processes.

11. Use of the formulations according to Claim 1 for the production of hydrogels.

## Revendications

1. Formulation à base d'une dispersion aqueuse de polymères contenant > 20% en poids d'une dispersion de polychloroprène stabilisée anioniquement, la concentration totale en solides étant réglée à 100% en poids **caractérisée en ce qu'**à un pH entre 6 et 10, la proportion d'acide carbonique dissous dans l'équilibre de dissociation est de 0,0001 à 2% en poids, par rapport à la dispersion.

2. Formulation selon la revendication 1, **caractérisée en ce qu'**à un pH de 6,5 à 9,5, la proportion d'acide carbonique dissous est de 0,001 à 1% en poids.

3. Formulation selon la revendication 1, **caractérisée en ce que** la concentration en ions de métal alcalin (Na⁺ + K⁺) est de 500 à 10 000 ppm.

4. Formulation selon la revendication 1, **caractérisée en ce qu'**elle contient des polyisocyanates hydrophilisés à base d'isocyanates de préférence aliphatiques.

5. Formulation selon la revendication 1, **caractérisée en ce qu'**elle contient des suspensions de silice nanodispersée dans l'eau.

6. Formulation selon la revendication 1, **caractérisée en ce qu'**elle présente une stabilité de la valeur du pH, selon la norme DIN 53381, procédé B, > 1 h.

7. Procédé pour la préparation de la formulation selon la revendication 1, **caractérisé en ce qu'**une dispersion aqueuse de polymères, contenant une dispersion de polychloroprène stabilisée anioniquement, est alimentée en dioxyde de carbone à 1-100°C et à 0,8-10 bars en une quantité, par litre de formulation, de 0,1 à 20 litres.

8. Procédé selon la revendication 7, **caractérisé en ce que** l'introduction des volumes de dioxyde de carbone a lieu par superposition de la dispersion dans un récipient élastique et le récipient est ensuite agité ou remué ou entreposé jusqu'à la diminution de volume souhaitée de la phase gazeuse et le dioxyde de carbone se trouvant le cas échéant au-dessus de la dispersion est relâché.

9. Utilisation des formulations selon la revendication 1 pour la préparation de formulations adhésives.

10. Utilisation des formulations selon la revendication 1 pour la préparation de matériaux d'étanchéité et d'isolation moussés, le cas échéant adhésifs, de pièces volumiques, de revêtements, de mousses adhésives ou d'objets de plongée.

11. Utilisation des formulations selon la revendication 1 pour la préparation d'hydrogels.
